(19) Europäisches Patentamt / European Patent Office / Office européen des brevets

(11) **EP 2 579 114 A2**

(12) **EUROPEAN PATENT APPLICATION**

(43) Date of publication:
**10.04.2013 Bulletin 2013/15**

(51) Int Cl.:
**G05B 15/02** *(2006.01)*

(21) Application number: **12179955.5**

(22) Date of filing: **09.08.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **15.08.2011 US 201113210241**<br><br>(71) Applicant: **General Electric Company**<br>**Schenectady, NY 12345 (US)** | (72) Inventors:<br> • **Runkle, Mark Andrew**<br>  **Schenectady, NY 12345 (US)**<br> • **Miller, Harold Edward**<br>  **Schenectady, NY 12345 (US)**<br><br>(74) Representative: **Picker, Madeline Margaret et al**<br>**GE International Inc.**<br>**Global Patent Operation - Europe**<br>**15 John Adam Street**<br>**London WC2N 6LU (GB)** |

(54) **Use of motor protection system to assist in determining power plant metrics**

(57) Disclosed herein is an approach that uses a motor protection system (330) to assist in determining power plant metrics. In one aspect, a motor protection system (330) obtains operational data from motor-driven sub-processes (325) operating within a power plant (310). A controller (120) receives the operational data and determines power plant metrics that may include net power plant output and costs each of the motor-driven sub-processes (325) has on the overall operation of the power plant (310). In another aspect, the controller (120) may partition the power metrics into one or more user-specified groupings for viewing thereof.

FIG. 3

EP 2 579 114 A2

Printed by Jouve, 75001 PARIS (FR)

**Description**

BACKGROUND OF THE INVENTION

The present invention relates generally to motor protection systems and more particularly to using motor protection measurements generated from a motor protection system to assist in determining power plant metrics.

Power plant optimization software packages are often used to monitor, maintain, schedule and optimize performance of a power plant. These power plant optimization software packages provide a great deal of information. However, there are gaps of information with respect to providing an understanding of the operation of a power plant that are not readily provided by these software packages. For example, typical power plant optimization software packages generally do not generate information (e.g., power profiles) that provides an understanding of the various sub-processes or auxiliary systems that operate within a power plant. As a result, plant operators have to set-up various types of equipment (e.g., potential transformers, current transformers and wattmeters) to the sub-processes if it is desired to obtain more information than what is provided by these power plant optimization software application packages. Setting up this equipment to the sub-processes can be complicated and expensive, thus making it undesirable to delve further into understanding information gaps not addressed by these power plant optimization software application packages.

BRIEF DESCRIPTION OF THE INVENTION

In one aspect of the present invention, a system is provided. The system comprises a power plant; a plurality of motor-driven sub-processes operating within the power plant; a plurality of motor protection systems, each coupled to one of the plurality of motor-driven sub-processes to generate a plurality of sub-process operational data therefrom; and a controller that uses the plurality of sub-process operational data generated from the plurality of motor-driven sub-processes to determine power plant metrics including net power plant output and costs each of the plurality of motor-driven sub-processes has on the overall operation of the power plant.

In another aspect of the present invention, a computer system is disclosed. The system comprises: at least one processing unit; memory operably associated with the at least one processing unit; and a power plant optimization application storable in memory and executable by the at least one processing unit that obtains operational data from a plurality of motor protection systems used with a plurality of motor-driven sub-processes operating within a power plant. The power plant optimization application is configured to perform the method comprising: determining a plurality of power plant metrics including net power plant output and costs each of the plurality of motor-driven sub-processes has on the overall operation of the power plant; partitioning the plurality of power plant metrics into one or more predetermined groupings; and generating a representation of the plurality of power plant metrics for at least one of the predetermined groupings in response to receiving a user-specified grouping selection.

In a third aspect of the present invention, a computer-readable storage medium storing computer instructions is disclosed. The computer instructions, which when executed, enable a computer system to facilitate power plant optimization. In this aspect of the present invention, the computer instructions comprise: obtaining operational data from a plurality of motor protection systems used with a plurality of motor-driven sub-processes operating within a power plant: determining a plurality of power plant metrics including net power plant output and costs each of the plurality of motor-driven sub-processes has on the overall operation of the power plant; partitioning the plurality of power plant metrics into one or more predetermined groupings; and generating a representation of the plurality of power plant metrics for at least one of the predetermined groupings in response to receiving a user-specified grouping selection.

BRIEF DESCRIPTION OF THE DRAWINGS

FIG. 1 is a schematic block diagram of an example of a representation of a power plant in which a system according to one embodiment of the present invention can be implemented;

FIG. 2 shows a flow chart illustrating the operation of generating power plant metrics from a power plant like the one depicted in FIG. 1 according to one embodiment of the present invention; and

FIG. 3 shows an example computing environment in which a power plant optimization application according to one embodiment of the present invention can be implemented to perform functions including determining power plant metrics.

**EP 2 579 114 A2**

DETAILED DESCRIPTION OF EMBODIMENTS OF THE INVENTION

Various embodiments of the present invention are directed to obtaining operational information generated from motor-driven sub-processes that operate within a power plant, and using this information to determine a multitude of power plant metrics. In one embodiment, motor protection systems may be used within each of the motor-driven sub-processes to obtain the operational data. A controller may receive the operational data from the motor protection systems and use it to determine the power plant metrics. In one embodiment, the power plant metrics may include net power plant output, costs of each of the motor-driven sub-processes as applied against the overall operation of the power plant, sub-process plant output for each of the sub-processes, energy consumption of each of the sub-processes determined as a function of sub-process plant output, whether each of the sub-processes is a chargeable thermodynamic loss that can be deducted from the net power plant output, an aggregate cost of the overall operation of the power plant that is based on the costs of each of the sub-processes, and a net heat rate of the power plant determined as a function of the sub-process operational data generated from the sub-processes.

In another embodiment, the controller may partition the power plant metrics into one or more groupings in order to facilitate an understanding of these metrics as applied to the various aspects of power plant operation. In one embodiment, the one or more groupings may include power plant standardized performance test codes, chargeable thermodynamic losses, contractual guarantees associated with the operation of the power plant, electrical assets operating within the motor-driven sub-processes that are eligible for energy credit savings programs, types of costs (e.g., fixed, variable, semi-variable) associated with the electrical assets operating within the sub-processes or loads associated with the sub-processes.

In another embodiment, the controller may use the operational data from the motor protection systems to perform a cost accounting analysis on the motor-driven sub-processes, a power accounting analysis of the power generated from each of the sub-processes and an energy accounting analysis of the impact of energy consumption by each of the sub-processes on the overall operation of the power plant.

Technical advantages of the various embodiments of the present invention include improving monitoring, management, maintenance and optimization of a power plant including motor-driven sub-processes operating within the plant. Improved monitoring, management, maintenance and optimization of the power plant including its motor-driven sub-processes result in increased efficiency and productivity of the plant.

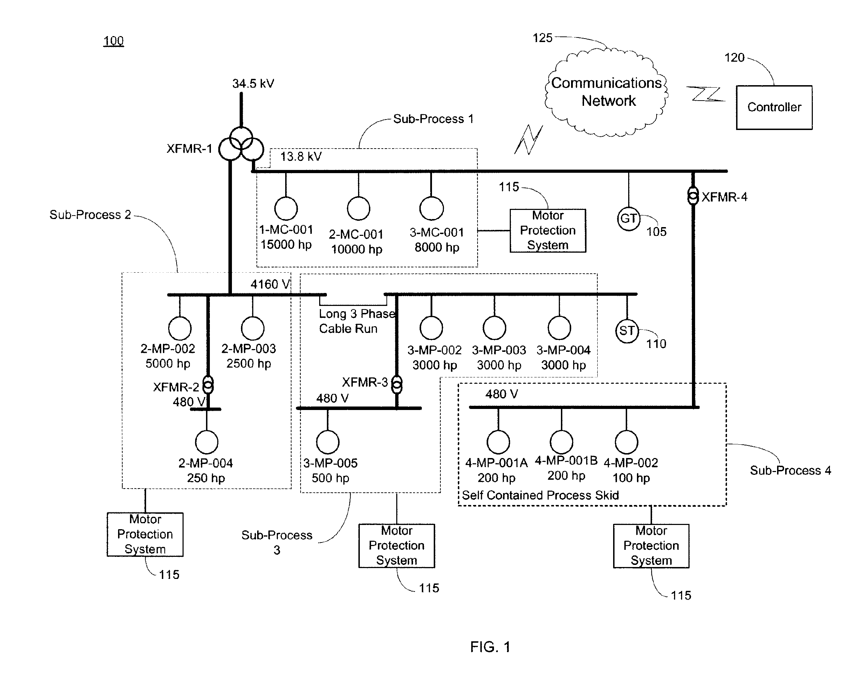

Referring to the drawings, FIG. 1 is a schematic block diagram of an example of a representation of a power plant in which a system 100 according to one embodiment of the present invention can be implemented. The power plant representation of FIG. 1 shows a gas turbine (GT) 105, a steam turbine (ST) 110 and a gas turbine (GT) generator 112 interspersed among various auxiliary systems (i.e., Sub-Process 1, Sub-Process 2, Sub-Process 3 and Sub-Process 4) having auxiliary machinery (electrical assets) coupled to common electrical buses.

As shown in the representation of FIG. 1, a 115 kilovolt (kV) high yard utility power connects to a three-phase transformer (XFMR-1) that splits this voltage among a primary transformer (i.e., the top circle of XFMR-1) and two secondary transformers (i.e., the right-hand circle and left-hand circle of XFMR-1). In particular, secondary transformer on the right-hand side of XFMR-1 generates a 13.8 kV voltage that is provided along a voltage bus, whereas the secondary transformer on the left-hand side of XFMR-1 generates a 4160 V voltage that is provided along a voltage bus. As shown in FIG. 1, the 13.8 kV voltage bus feeds three very large motor/compressor sets that are used in Sub-Process 1, and feeds gas turbine 105. In FIG. 1, one motor/compressor set that is in Sub-Process 1 is designated by an MC-001. The prefixes 1, 2 and 3 that precede MC-001 are used to designate that each motor/compressor set is used in one of the auxiliary systems of Sub-Process 1.

The 13.8 kV voltage bus also feeds Sub-Process 4, which may be a self-contained process skid (e.g., a small lube oil supply skid), by a long cable via a step-down transformer (XFMR-4) with fixed taps. As shown in FIG. 1, the self-contained process skid of Sub-Process 4 comprises several motor/pump sets. In FIG. 1, the motor/pump sets that are in Sub-Process 4 are designated by 4-MP. The suffixes 001A, 001B and 002 designate the motor/pump set used in Sub-Process 4.

Sub-Process 2 as shown in FIG. 1 comprises motor/pump sets 2-MP-002, 2-MP-003 and 2-MP-004. Note that motor/pump 2-MP-004 receives 480V via a step-down transformer XFMR-2 that reduces the 4160V to the 480V.

As shown in FIG. 1, Sub-Process 3 is coupled to the 4160 V bus via a long 3-phase cable run. Sub-Process 3 is shown as comprising a multiple of motor/pump sets 3-MP-002, 3-MP-003, 3-MP-004 and 3-MP-005. Note that motor/pump 3-MP-005 receives 480V via a step-down transformer XFMR-3 that reduces the 4160V to the 480V.

In addition, FIG. 1 shows gas turbine (GT) generator 112 coupled to the grid via a generator step-down transformer GSU XFMR-1. In this embodiment, the step-down transformer GSU XFMR-1 lowers the 115 kV from the grid to 18 kV as it is supplied to gas turbine (GT) generator 112.

The power plant representation illustrated in FIG. 1 is only one example of a schematic representation of a power plant and that for ease of illustrating embodiments of the present invention other components of the power plant are not illustrated herein. Moreover, those skilled in the art will recognize that typical power plants could have much more auxiliary systems or sub-processes than what is illustrated in FIG. 1. The power plant representation of FIG. 1 is not meant to limit the scope of the various embodiments of the present invention described herein.

Referring back to FIG. 1 for a description of the various embodiments of the present invention, a motor protection system 115 is shown coupled to each Sub-Process. Each motor protection system 115 protects the motors operating within the motor-driven sub-processes from failing by protecting against items that may include unbalanced loads, excessively high overcurrent faults, undervoltage conditions, overvoltage conditions, mechanical jams and load losses. In one embodiment, the motors used in the motor-driven sub-processes may be industrial electric motors such as three-phase motors (e.g., induction motors and synchronous motors).

In addition to functioning to protect motors, each motor protection system 115 is capable of capturing a multitude of data from the motor-driven sub-processes. For example, each motor protection system 115 can obtain data from the motors operating within the motor-driven sub-processes such as voltage, phase voltage, frequency, current, power, VARs used to measure reactive power, etc. In addition, each motor protection system 115 can obtain data that provides a measure of other parameters of the power generation process. Also, each motor protection system 115 can generate statistical data of the motors including, for example, maximum values, minimum values, moving values of average, standard deviation, extreme ranges, etc. Furthermore, each motor protection system 115 can obtain data from the windings and bearings of the motors, as well as some of the devices (e.g., pumps, compressors) driven by these motors.

For ease of illustrating the various embodiments of the present invention, FIG. 1 shows only one motor protection system 105 per sub-process. However, in one embodiment, each motor in the sub-process could have its own motor protection system 105 coupled thereto protect the motor and to obtain various operational data.

Motor protection system 115 may be any commercially available motor protection device such as a motor control center, electric meter or relay. One example of a commercially available motor protection system that may be used as motor protection system 115 is a 369 Motor Management Relay sold by GE Multilin. Those skilled in the art will recognize that there are other commercially available motor protection devices that perform functions and generate information similar to the 369 Motor Management Relay.

Referring back to FIG. 1, a controller 120 connects to each sub-process (i.e., Sub-Process 1, Sub-Process 2, Sub-Process 3, and Sub-Process 4) including the motor protection systems 115. As shown in FIG. 1, controller 120 communicates to the motor-driven sub-processes and the motor protection systems 115 via a communications network 125. In one embodiment, controller 120 can be used to determine a multitude of power plant metrics from the operational data. For example, controller 120 can determine the net power plant output, which is the power generated from the power plant minus the internal plant load of each of the motor-driven sub-processes that detract from the generated power. As used herein, the sub-process plant output provides a measure of the amount of thermodynamic loss that the internal plant loads of the motor-driven sub-processes has on the power generated from the power plant.

Controller 120 can determine the sub-process plant output metric for each of the motor-driven sub-processes (i.e., Sub-Process 1, Sub-Process 2, Sub-Process 3 and Sub-Process 4). In one embodiment, controller 120 determines the sub-process plant output as a function of energy consumption of each of the motor-driven sub-processes. Controller 120 can use the sub-process plant output for each of the motor-driven sub-processes to determine whether each sub-process is a chargeable thermodynamic loss that can be deducted from the net power plant output. Controller 120 can also use the sub-process plant output to correlate a cost that each of the motor-driven sub-processes has on the overall operation of the power plant. With all of the costs determined, controller 120 can sum up these costs in order to determine an aggregate cost of the overall operation of the power plant that is based on the costs of each of the motor-driven sub-processes.

In one embodiment, controller 120 can track the aggregate cost of the overall operation of the power plant to generate a contractual performance indicator that indicates whether the power plant is conforming to predetermined contractual guarantees specified for operation of the power plant. Oftentimes, sales and installations of power plants are the subject of various performance specifications memorialized in contracts between power plant manufacturers and customers that specify certain performance guarantees. In one embodiment, the performance indication determined by controller 120 can indicate whether the power plant is meeting these contractual guarantees or is not.

Another power plant metric that controller 120 can determine from the operational data obtained by the motor protection systems 115 in the motor-driven sub-processes is the net heat rate of the power plant. As used herein, the net heat rate is the amount of heat input to an engine or thermodynamic cycle in BTU per kWh of net plant power output. Referring to FIG. 1, the net plant power output can be defined as the energy provided to the grid less the amount of power consumed by the power plant illustrated in the figure to produce that energy. The usual and expected English system of BTU/kWh is an inverse efficiency. As is known in the art, 3412 BTU/kWh/efficiency is the expected value for a 100% efficient plant. Note that a plant that is 50% efficient would have a net heat rate of 6824 BTU/kWh (3412/0.5=6824 BTU/kWh).

In addition to the above-noted power plant metrics, controller 120 can use the operational data generated from the motor protection systems 115 to perform other metrics that pertain to accounting analyses. For example, in one embodiment, controller 120 can use the operational data generated from the motor protection systems 115 to perform a cost accounting analysis on the motor-driven sub-processes. The cost accounting analysis could entail, for example, capturing the marginal cost of running a turbine on liquid fuel, and the energy consumed by the motors of the liquid fuel forwarding pumps, the fuel pump, atomizing air compressor and water injection system for NOx abatement. In another embodiment, controller 120 can use the operational data generated from the motor protection systems 115 to perform a power accounting analysis of the power generated from each of the motor-driven sub-processes and an energy accounting analysis of the impact of energy consumption by each of the sub-processes on the overall operation of the power plant. The power accounting analysis could entail, for example, tracking power consumption from groups of motors operating to achieve a common purpose, such as a large bank of cooling fans. Many power plants just let all of their cooling fans run all of the time. In particular, by exhortation from the United States Department of Energy, there are incentives to reduce power consumption by placing controls in the fan system to turn off or turn down the speed of the fans on cool to cold days. To demonstrate the federal incentive to be more efficient, a power accounting analysis on the bank of motors running the fans is a demonstration of success and establishing a "used and useful" status for net power plant output value to enter the rate base. Energy accounting analysis could entail an effort similar to the power accounting analysis, only with units of kWh for energy rather than watts.

Below are further details on how controller 120 determines the above-noted power plant metrics including the various above-noted accounting analyses.

Although the various embodiments of the present invention describe controller 120 used in the determination of power plant metrics, those skilled in the art will recognize that the controller can be used to perform additional functions. For example, controller 120 can be used as a host computer that is at a remote location that performs remote monitoring and diagnostics of the motor-driven sub-processes, as well as general management of the electrical assets that form the auxiliary systems.

In another embodiment, instead of having controller 120 located remotely from the power plant, it is possible to configure a controller locally, or even have a controller that is specifically configured to each of the motor-driven sub-processes in the power plant.

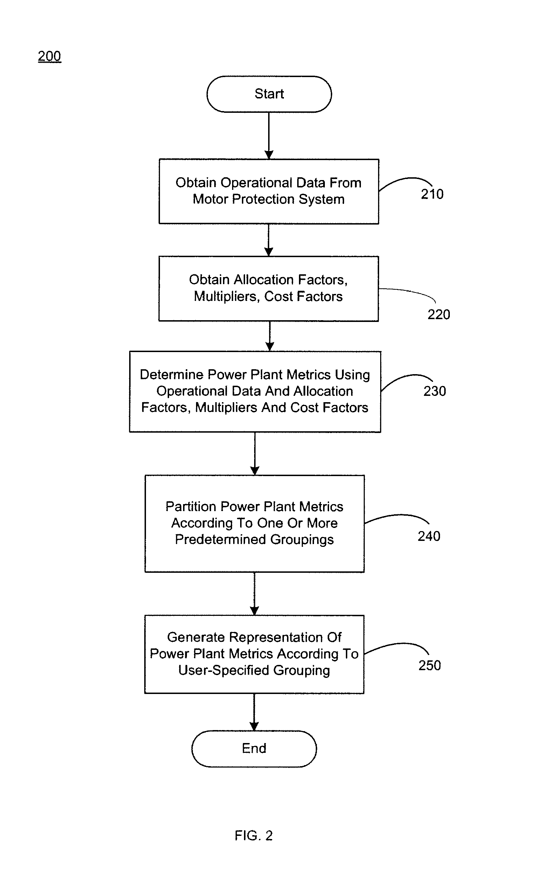

This embodiment enables a plant operator to receive the power plant metric while within the power plant at the sub-process level. Regardless of where controller 120 is located, it can be implemented with a power plant optimization application that is configured to interact with motor protection system 115 and use data obtained therefrom to determine the above-noted power plant metrics and transform this information in a presentable manner that can be used to monitor, manage, maintain and optimize the power plant including the sub-processes operating within the plant. FIG. 2 shows a flow chart 200 illustrating the operation of generating power plant metrics from a power plant like the one depicted in FIG. 1 according to one embodiment of the present invention. As shown in FIG. 2, flow chart 200 begins at 210 where operational data is received from the motor protection systems 115 (FIG. 1) located about each of the motor-driven sub-processes operating within power plant 100 (FIG. 1). As mentioned above, in one embodiment, controller 120 (FIG. 1) receives operational data from each of the motor protection systems 115 via communications network 125 (FIG. 1), such as voltage, phase voltage, frequency, current, power, VARs, phase current, current unbalance, voltage unbalance, etc.

Flow chart 200 continues at 220 where controller 120 (FIG. 1) obtains information that facilitates the determination of the power plant metrics. In particular, allocation factors, multipliers, and cost factors are retrieved in order to determine various power plant metrics. In one embodiment, the allocation factors, multipliers, and cost factors, which can specified by an operator beforehand, are generally factors multiplied by the power readings that are used to convert watts into dollars. For example, to achieve sufficient pressure to satisfy gas turbine combustion systems, a natural gas compressor is sometimes used to boost the pipeline pressure up to the required value. At a power plant with multiple turbines, the allocation of the cost of electricity consumed by the compressor motor can be dynamically allocated to the turbines running based upon their fuel consumption. If only two turbines are running out of six, then the entire cost of the compressor motor's power consumption can be allocated to the consumers in real time.. In another example, consider a lube oil skid in a combined cycle steam and gas plant. If it is a multi-shaft steam and gas plant, then an allocation factor can be used to place the pump power percentage of the lube oil skid based upon what machines are rotating. With a single-shaft steam and gas plant, this allocation would not be needed since rotating the shaft is all or nothing.

At 230, controller 120 (FIG. 1) uses the operational data and the allocation factors, multipliers, and/or cost factors to determine the power plant metrics. As mentioned above, one of the power plant metrics includes the net power plant output, which is the power generated from the power plant minus the internal plant load of each of the motor-driven sub-processes that detract from the generated power. Stated another way, the net power plant output is generated power less those "chargeable" losses in the plant that provide inputs to the air Brayton cycle for a gas turbine or the Rankine cycle for a typical steam turbine.

Net heat rate of the power plant is another power plant metric that can be determined by controller 120. As mentioned above, generally, heat rate is an inverse measure of efficiency. Therefore, if Q is the amount of energy in Btu/hr needed in a thermodynamic cycle to create 1 kW hour or 1 kWh of electrical energy, then the Heat Rate = Q. As is known in the art, 100% efficiency is about 3412 Btu/kWh. Typical efficiencies for a combined cycle turbine are about 6600 Btu/kWh and as high as about 9300 Btu/kWh for simple cycle units. For a fuel burning cycle like the air Brayton cycle for gas turbines, Q is typically defmed as the Btu/lb of fuel consumed * lbs/hour of fuel consumption, while for a Rankine vapor cycle process like a steam turbine, Q is typically defined as enthalpy in Btu/lb * lbs/hour of steam flow. Those skilled in the art of thermal cycles appreciate that for both types of turbines that the heating value and the enthalpy are strong functions of the state variables pressure and temperature at delivery. Thus, net heat rate is based upon net output, which makes the denominator smaller for the same heat input or less efficient.

Below is an equation that provides a representation of both net power plant output and net heat rate:

$$ Net\_Output = \sum_G Dwatts_G - \sum_L MotorPower_L * Allocation_L, \text{ wherein} \qquad (1) $$

G = 1,2 ... Number of Generators

L = 1, 2 ... Number of Process Motors

$Dwatts_G$ is the Generator Terminal Output of Generator G in Watts

$MotorPower_L$ is the Power Consumption of Motor L in Watts

$Allocation_L$ is the Dimensionless Allocation Factor.

Using equation 1, controller 120 (FIG. 1) can determine other power plant metrics. For instance, the sub-process plant output, which provides a measure of the amount of thermodynamic loss that the internal plant loads of each of the motor-driven sub-processes has on the power generated from the power plant can be determined. In particular, the sub-process plant output is a function of energy consumption of each of the motor-driven sub-processes and is typically determined by the fuel consumption of the gas turbines. As mentioned above, controller 120 can use the sub-process plant output for each of the motor-driven sub-processes to determine whether each sub-process is a chargeable thermodynamic loss that can be deducted from the net power plant output.

Controller 120 (FIG. 1) can also use the sub-process plant output to correlate a cost that each of the motor-driven sub-processes has on the overall operation of the power plant. In one embodiment, the cost that a motor-driven sub-process has on the operation of the power plant is determined by its kWh energy consumption. With all of the costs determined, controller 120 can sum up these costs in order to determine an aggregate cost of the overall operation of the power plant that is based on the costs of each of the motor-driven sub-processes.

Another power plant metric determination that controller (FIG. 1) can perform includes tracking the aggregate cost of the overall operation of the power plant with respect to an outstanding contract between a power plant manufacturer and a customer that specifies certain performance guarantees. In one embodiment, controller 120 tracks the aggregate cost of the overall operation of the power plant by generating a contractual performance indicator that indicates whether the power plant is conforming to predetermined contractual guarantees. This functionality gives the ability to track part-load net output and heat rate at all times.

As mentioned above, controller 120 (FIG. 1) can perform other metrics for the power plant that pertain to accounting analyses. In one embodiment, controller 120 can perform a cost accounting analysis on the motor-driven sub-processes operating within the power plant. In one embodiment, the cost accounting analysis could entail, for variable costs, determining factors that convert power in to dollars. For fixed cost allocation, the cost accounting analysis could entail capturing the total energy consumption of devices not directly attributed to power generation, in order to help determine more accurate plant overhead costs. In another embodiment, controller 120 can perform a power accounting analysis of the power generated from each of the motor-driven sub-processes and an energy accounting analysis of the impact of energy consumption by each of the sub-processes on the overall operation of the power plant. The power accounting analysis could entail accurately understanding each sub-process within a plant to accurately aggregate consumption, while the energy accounting analysis could entail determining results similar to the power accounting analysis. In either case, the ability of controller 120 to store and retrieve this information gives the user the ability to trend data as a function of plant load during a day, seasonal variations during the year, or over years to assess degradation of the equipment.

Referring back to FIG. 2, flow chart 200 continues at 240 where controller 120 (FIG. 1) partitions the power plant metrics according to one or more predetermined groupings. The predetermined groupings may be specified by an operator or configured by controller 120 to match the particular information desired by the operator. In one embodiment, one grouping of the power plant metrics can be by standardized performance test codes. For example, certain motor-driven sub-processes operating within a power plant operate according to standardize test codes such as, for example, those set by the American Society of Mechanical Engineers (ASME). For example, the ASME uses power test codes (PTC) to test the operation of steam turbines (e.g., PTC 6), gas turbines (e.g., PTC 22), the overall plant (e.g., PTC 46), and auxiliary systems (e.g., PTC 46c). Partitioning the power plant metrics by ASME PTCs is advantageous because it becomes clear to the plant operator where to make improvement in his or her equipment for efficiency and capacity improvements. As example, if an operator were interested a particular motor-driven sub-process operating with a power plant, then with this feature an operator could optimize three-way valves with bypass loops used with high-pressure feedwater pumps to save pump power by proper choice of the valve and the bypass flow impedance.

In another embodiment, controller 120 (FIG. 1) may partition the power plant metrics according to chargeable thermodynamic losses. For example, feedwater pumps for steam plant operation and liquid fuel pumps for gas turbine fuel systems are directly chargeable to the thermodynamic cycle and could be partitioned by these thermodynamic losses. In another example, a 2 horsepower motor running a sump pump in a control room is not a chargeable thermodynamic loss against turbine performance, and thus this might be something that is not partitioned for viewing by a plant operator. On the other hand, a plant operator would likely have an interest in the pump used by a liquid fuel pump to supply fuel to a gas turbine because the thermodynamic cycle of the turbine may be affected. Thus, this metric could be made readily available along with any other sub-processes that are chargeable thermodynamic losses.

In another embodiment, controller 120 (FIG. 1) may partition the power plant metrics according to contractual guarantees associated with operation of the power plant. In one embodiment, controller 120 could generate a representation of the power plant metrics according to the various aspects of operation of a power plant that are specific to certain contractual performance guarantees. As an example, it is common for utilities, due to regulation, to partition themselves into transmission, generation and fuel supply businesses. For example, all of the motors in FIG. 1 could be used in a process to manufacture synthetic gas for fuel and belong to a different enterprise than the gas turbines that burn that fuel. So, for proper bookkeeping for power, energy or cost, the need to allocate becomes apparent. Furthermore, a synthetic gas facility may have a contractual guarantee to deliver an equivalent therm of natural gas at a given cost/therm. Embodiments of the present invention assist in the appropriate allocation of that information by economically gathering key information from motor protection system 115 (e.g., motor control centers) that has been heretofore unavailable.

In another embodiment, controller 120 (FIG. 1) may partition the power plant metrics according to any electrical assets operating within any of the motor-driven sub-processes that are eligible for energy credit savings programs provided by a government or state agency. For example, the U.S. Department of Energy and other agencies in other countries provide credits for equipment with an auxiliary system that attains ENERGY STAR™ savings. Therefore, controller 120 could partition metrics to provide results that focus specifically on equipment or electrical assets operating in a motor-driven sub-process that are subject to ENERGY STAR™ savings. For example, some customers want to have turndown capability on a particular water cooler unit. A unit that typically has 4 or 6 fans is too much for cool conditions. As a result, customers will typically manually control operation of the fan in cool to cold weather. By enabling remote switching of fans or converting the motors driving these fans to variable frequency drives, an annual savings can be obtained. Embodiments of the present invention could identify the motors involved and summarize watts and MWhrs consumed to show before and after savings.

In another embodiment, controller 120 (FIG. 1) may partition the power plant metrics according to the type of cost associated with electrical assets operating within the motor-driven sub-processes. For example, equipment used in the motor-driven sub-processes of the power plant can be classified as a fixed cost, a semi-variable cost or a variable cost. By partitioning the metrics by the type of cost (i.e., fixed, semi-variable, variable) an operator can attain a fmer understanding of how these assets affect the power and costs associated with the operation of the power plant.

In another embodiment, controller 120 (FIG. 1) may partition the power plant metrics according to the loads associated with each of the motor-driven sub-processes. Partitioning the metrics by the type of cost (i.e., fixed, semi-variable, variable) also enables an operator to attain a finer understanding of how these sub-processes affect the power and costs associated with the operation of the power plant.

Referring back to flow chart 200, after partitioning the power plant metrics according to one or more of the above-noted groupings, controller 120 (FIG. 1) can then generate a representation of the metrics at 250 for viewing. In one embodiment, this includes displaying the metrics on computing unit (e.g., host computer, hand-held computing device, etc.) for viewing by an operator. The operator can use this information to improve the monitoring, management, maintenance and optimization of the power plant and its various auxiliary systems.

After generating a great deal of information regarding metrics for power, energy and cost, it may be desirable to convey this information to a user in a graphical representation format. Thus, controller 120 (FIG. 1) may display a graphical representation of the power plant metrics for at least one of the user-specified groupings at 260. In one embodiment, the displaying of the graphical representation of the power plant metrics for at least one of the user-specified groupings may include trending the data embodied by the metrics over a period of time. In one embodiment, a user could select to view power plant metrics for a specific grouping over a period of time. Controller 120 would then retrieve the metrics over this time period and use well-known trending applications to overlay this data in a format that provides a visual understanding of the metrics as it trends over time. The ability to overlay year over year results of the power plant metrics can be desirable in order to ascertain an understanding of the seasonal and annual trends of the data in the metrics. For example, due to the nature of gas turbine sensitivity to ambient temperature and steam turbine sensitivity to cooling water temperature, understanding seasonal and annual trends of this sensitivity will provide invaluable information on the operation of the gas turbine and steam turbine during these periods.

The foregoing flow chart of FIG. 2 shows some of the processing functions associated with generating power plant metrics. In this regard, each block represents a process act associated with performing these functions. It should also be noted that in some alternative implementations, the acts noted in the blocks may occur out of the order noted in the figure or, for example, may in fact be executed substantially concurrently or in the reverse order, depending upon the act involved. Also, one of ordinary skill in the art will recognize that additional blocks that describe the processing functions may be added.

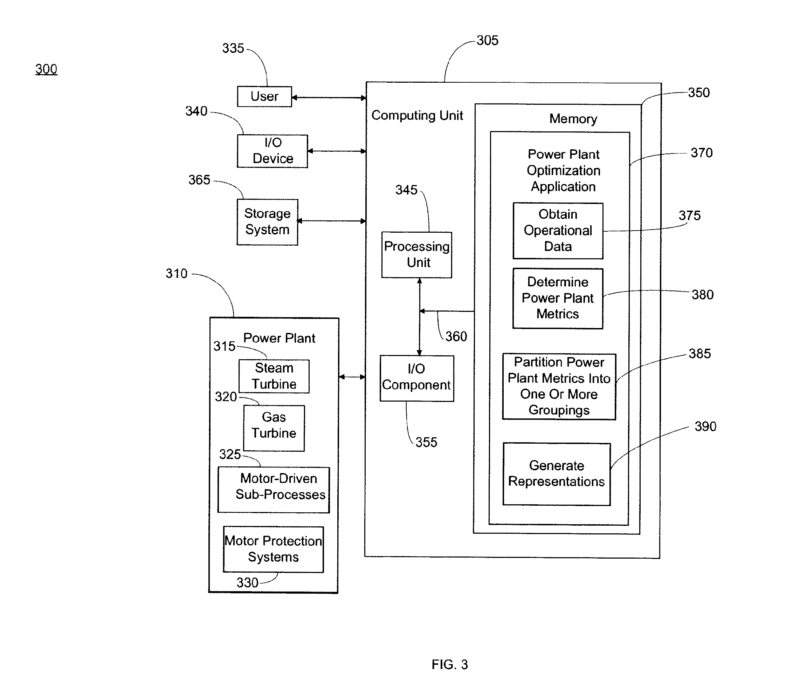

FIG. 3 shows an example computing environment 300 in which a power plant optimization application according to one embodiment of the present invention can be implemented to perform functions including determining power plant metrics. As shown in FIG. 3, computing environment 300 includes computing unit 305. Computing unit 305 is shown in communication with power plant 310 which is schematically represented by a steam turbine 315, a gas turbine 320, motor-driven sub-processes 325 and motor protection systems 330. Those skilled in the art will recognize that other representations of a power plant are possible and that elements of power plant 310 are not intended to limit the scope of the various embodiments of the present invention described herein.

FIG. 3 shows that computing unit 305 is in communication with a user 335. User 335 may, for example, be a plant operator or another computer system. In one embodiment, a plant operator may use an input/output (I/O) device 340 to interact with computing unit 305. I/O device 340, which may include, but is not limited to a keyboard, a display, a pointing device, etc., may couple to computing unit 305 either directly or through intervening I/O controllers. In another embodiment, I/O device 340 may be any device that enables computing unit 305 to communicate with one or more other computing devices.

Computing unit 305 includes a processing unit 345 (e.g., one or more processors), a memory component 350 (e.g., a storage hierarchy), an I/O component 355 (e.g., one or more I/O interfaces and/or devices), and a communications pathway 360 such as a bus that couples these elements. In addition to being in communication with power plant 310, computing unit 305 is in communication with user 335, I/O device 340 and a storage system 365.

In one embodiment, processing unit 345 may execute program code embodying power plant optimization application 370 which contains modules 375, 380, 385 and 390 that perform the functionalities described with respect to FIG. 2. In one embodiment, power plant optimization application 370 may be at least partially fixed in memory 350 and/or storage system 365.

Computer program code for carrying out operations of embodiments of power plant optimization application 370 may be written in any combination of one or more programming languages, including but not limited to, an object oriented programming language such as Java, Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider.

While executing program code, processing unit 345 can process data, which can result in reading and/or writing the data, such as the operational data from power plant 310 to and from memory 350, storage system 365, and/or I/O component 355 for further processing. Communications pathway 360 provides a communications link between each of the components in computing unit 305. I/O component 355 can comprise one or more human I/O devices or storage devices, which enable user 335 to interact with computing unit 305 and/or one or more communications devices. To this extent, power plant optimization application 370 can manage a set of interfaces (e.g., graphical user interface(s), application program interface, and/or the like) that enable user 335 to interact with the application. Further, power plant optimization application 370 can manage (e.g., store, retrieve, create, manipulate, organize, present, etc.) the operational data.

In any event, computing unit 305 can comprise one or more general purpose computing articles of manufacture capable of executing program code, such as power plant optimization application 370, installed thereon by a user 335 via a personal computer, server, handheld device, etc. As used herein, it is understood that program code may mean any collection of instructions, in any language, code or notation, that cause a computing unit having an information processing capability to perform a particular function either directly or after any combination of the following: (a) conversion to another language, code or notation; (b) reproduction in a different material form; and/or (c) decompression. To this extent, power plant optimization application 370 can be embodied as any combination of system software and/or application software.

Furthermore, those skilled in the art will recognize that power plant optimization application 370 can also be embodied as a method(s) or computer program product(s), e.g., as part of an overall control system for a power plant. Accordingly, embodiments of the present invention may take the form of an entirely hardware embodiment, an entirely software embodiment (including firmware, resident software, micro-code, etc.) or an embodiment combining software and hardware aspects that may all generally be referred to herein as a circuit, module, or system.

As used herein, the term "component" means any configuration of hardware, with or without software, which implements the functionality described in conjunction therewith using any solution, while the term module means program code that enables computing unit 305 to implement the functionality described in conjunction therewith using any solution. When fixed in memory of computing unit 305 that includes the processing unit 345, a module is a substantial portion of a component that implements the functionality. Regardless, it is understood that two or more components, modules, and/or systems may share some/all of their respective hardware and/or software. Further, it is understood that some of the functionality discussed herein may not be implemented or additional functionality may be included as part of computing unit 305. When computing unit 305 comprises multiple computing devices, each computing device may have only a portion of power plant optimization application 370 embodied thereon (e.g., one or more modules).

However, it is understood that computing unit 305 and power plant optimization application 370 are only representative of various possible equivalent computing devices that may perform the process steps of the various embodiments of the present invention. To this extent, in other embodiments, computing unit 305 can comprise any specific purpose computing article of manufacture comprising hardware and/or computer program code for performing specific functions, any computing article of manufacture that comprises a combination of specific purpose and general purpose hardware/software, or the like. In each case, the program code and hardware can be created using standard programming and engineering techniques, respectively.

Similarly, computing environment 300 is only illustrative of various types of computer infrastructures for implementing the various embodiments of the present invention described herein. For example, in one embodiment, computing environment 300 may comprise two or more computing devices (e.g., a server cluster) that communicate over any type of wired and/or wireless communications link, such as a network, a shared memory, or the like, to perform the various process steps described herein. When the communications link comprises a network, the network may comprise any combination of one or more types of networks (e.g., the Internet, a wide area network, a local area network, a virtual private network, etc.).

While the disclosure has been particularly shown and described in conjunction with a preferred embodiment thereof, it will be appreciated that variations and modifications will occur to those skilled in the art. Therefore, it is to be understood that the appended claims are intended to cover all such modifications and changes as fall within the scope of the invention defined therein.

**Claims**

1. A system (100), comprising:

   a power plant (310);
   a plurality of motor-driven sub-processes (325) operating within the power plant (310);
   a plurality of motor protection systems (330), each coupled to one of the plurality of motor-driven sub-processes (325) to generate a plurality of sub-process operational data therefrom; and
   a controller (120) that uses the plurality of sub-process operational data generated from the plurality of motor-driven sub-processes (325) to determine power plant metrics including net power plant output and costs each of the plurality of motor-driven sub-processes (325) has on the overall operation of the power plant (310).

2. The system (100) according to claim 1, wherein the power plant metrics further includes sub-process plant output for each of the plurality of motor-driven sub-processes (325).

3. The system (100) according to claim 2, wherein the controller (120) determines whether each of the plurality of motor-driven sub-processes (325) is a chargeable thermodynamic loss that can be deducted from the net power plant output.

4. The system (100) according to claim 1, 2 or 3, wherein the power plant metrics further includes an aggregate cost of the overall operation of the power plant (310) that is based on the costs of each of the plurality of motor-driven sub-processes (325).

5. The system (100) according to any preceding claim, wherein the controller (120) tracks the aggregate cost of the overall operation of the power plant (310) and generates a contractual performance indicator that indicates whether the power plant (310) is conforming with predetermined contractual guarantees specified for operation of the power plant (310).

6. The system (100) according to any preceding claim, wherein the controller (120) performs a cost accounting analysis on the plurality of motor-driven sub-processes (325) that is based on the plurality of sub-process operational data.

7. The system (100) according to any preceding claim, wherein the controller (120) performs a power accounting analysis of the power generated from each of the plurality of motor-driven sub-processes (325) and an energy accounting analysis of the impact of energy consumption by each of the plurality of motor-driven sub-processes (325) on the overall operation of the power plant (310).

8. The system (100) according to any preceding claim, wherein the controller (120) determines a net heat rate of the power plant (310) as a function of the plurality of sub-process operational data generated from the plurality of motor-driven sub-processes (325).

9. A computer system (305), comprising:

at least one processing unit (345);
memory (350) operably associated with the at least one processing unit (345); and
a power plant optimization application (370) storable in memory (350) and executable by the at least one processing unit (345) that obtains operational data from a plurality of motor protection systems (330) used with a plurality of motor-driven sub-processes (325) operating within a power plant (310), the power plant optimization application (370) configured to perform the method comprising:

determining a plurality of power plant metrics including net power plant output and costs each of the plurality of motor-driven sub-processes (325) has on the overall operation of the power plant (310);
partitioning the plurality of power plant metrics into one or more predetermined groupings; and
generating a representation of the plurality of power plant metrics for at least one of the predetermined groupings in response to receiving a user-specified grouping selection.

10. The computer system (305) according to claim 9, wherein the plurality of power plant metrics includes at least one of:

sub-process plant output for each of the plurality of motor-driven sub-processes;
an aggregate cost of the overall operation of the power plant that is based on the costs of each of the plurality of motor-driven sub-processes;
a contractual performance indicator that indicates whether the power plant is conforming with predetermined contractual guarantees specified for operation of the power plant; and
a net heat rate of the power plant determined as a function of the operational data generated from the plurality of motor protection systems used with the plurality of motor-driven sub-processes.

11. The computer system (305) according to claim 9 or claim 10, wherein the predetermined groupings comprises at least one of power plant standardized performance test codes, chargeable thermodynamic losses, contractual guarantees associated with operation of the power plant (310), electrical assets operating within the plurality of motor-driven sub-processes that are eligible for energy credit savings programs, type of cost associated with the electrical assets operating within the plurality of motor-driven sub-processes or loads associated with the plurality of motor-driven sub-processes.

12. The computer system (305) according to claim 9, 10 or 11, further comprising displaying a graphical representation of the power plant metrics for at least one of the user-specified grouping selections.

13. The computer system (305) according to claim 12, wherein the displaying of the graphical representation includes displaying trending data of the power plant metrics for the at least one user-specified grouping selection over a period of time.

14. A computer-readable storage medium storing computer instructions (370), which when executed, enable a computer system (305) to facilitate power plant optimization, the computer instructions (370) comprising:

obtaining operational data from a plurality of motor protection systems (330) used with a plurality of motor-driven sub-processes (325) operating within a power plant (310):

determining a plurality of power plant metrics including net power plant output and costs each of the plurality of motor-driven sub-processes (325) has on the overall operation of the power plant (310);
partitioning the plurality of power plant metrics into one or more predetermined groupings; and
generating a representation of the plurality of power plant metrics for at least one of the predetermined groupings in response to receiving a user-specified grouping selection.

**15.** The computer-readable medium according to claim 14, wherein the predetermined groupings comprises at least one of power plant standardized performance test codes, chargeable thermodynamic losses, contractual guarantees associated with operation of the power plant, electrical assets operating within the plurality of motor-driven sub-processes that are eligible for energy credit savings programs, type of cost associated with the electrical assets operating within the plurality of motor-driven sub-processes or loads associated with the plurality of motor-driven sub-processes.

**16.** The computer-readable medium according to claim 14 or claim 15, further comprising instructions for performing at least one of: a cost accounting analysis on the plurality of motor-driven sub-processes that is based on the plurality of sub-process operational data, a power accounting analysis of the power generated from each of the plurality of motor-driven sub-processes or an energy accounting analysis of the impact of energy consumption by each of the plurality of motor-driven sub-processes on the overall operation of the power plant.

FIG. 1

200

```
        ┌─────────────┐
        │    Start    │
        └─────────────┘
               │
               ▼
  ┌─────────────────────────────┐
  │ Obtain Operational Data From │      210
  │   Motor Protection System    │
  └─────────────────────────────┘
               │
               ▼
  ┌─────────────────────────────┐
  │    Obtain Allocation Factors,│
  │   Multipliers, Cost Factors  │      220
  └─────────────────────────────┘
               │
               ▼
  ┌─────────────────────────────┐
  │ Determine Power Plant Metrics│
  │ Using Operational Data And   │      230
  │ Allocation Factors,          │
  │ Multipliers And Cost Factors │
  └─────────────────────────────┘
               │
               ▼
  ┌─────────────────────────────┐
  │   Partition Power Plant      │
  │   Metrics According To One Or│      240
  │   More Predetermined         │
  │   Groupings                  │
  └─────────────────────────────┘
               │
               ▼
  ┌─────────────────────────────┐
  │  Generate Representation Of  │
  │ Power Plant Metrics According│      250
  │ To User-Specified Grouping   │
  └─────────────────────────────┘
               │
               ▼
        ┌─────────────┐
        │     End     │
        └─────────────┘
```

FIG. 2

300

335 — User

340 — I/O Device

365 — Storage System

305 — Computing Unit

350 — Memory

370 — Power Plant Optimization Application

345 — Processing Unit

375 — Obtain Operational Data

380 — Determine Power Plant Metrics

385 — Partition Power Plant Metrics Into One Or More Groupings

390 — Generate Representations

360

355 — I/O Component

310 — Power Plant

315 — Steam Turbine

320 — Gas Turbine

325 — Motor-Driven Sub-Processes

330 — Motor Protection Systems

FIG. 3